# EUROPÄISCHE PATENTANMELDUNG

(11) **EP 0 924 279 A1**
(43) Veröffentlichungstag der Anmeldung: **23.06.1999**
(21) Anmeldenummer: 98123814.0
(22) Anmeldetag: 15.12.1998
(51) Int. Cl.: C09J 151/00, C08F 263/04, C08F 265/04

(54) **Dispersionsklebstoff**

(30) Priorität: 20.12.1997 DE 19757096
(71) Anmelder: NOKIA TECHNOLOGY GmbH, 75175 Pforzheim (DE)
(72) Erfinder: Huber, Angela, 94486 Osterhofen (DE); Lang, Johann, 94345 Obermotzing (DE); Stahl, Susanne, 93455 Traitsching (DE)
(74) Vertreter: Stendel, Klaus

(57) **Zusammenfassung**

Die Erfindung befaßt sich mit der Verbesserung von Dispersionsklebstoffen auf Polyvinylacetat- und/oder Polyacrylatbasis, insbesondere mit der sofortigen Weiterverarbeitungsfähigkeit unter Verwendung solcher Klebstoffe hergestellten Verbindungen.

Wird dem jeweiligen Dispersionsklebstoff ein alifatisches difunktionelles Acrylat zugesetzt, wird die Soforthaftung (Tack) entscheidend verbessert. Enthält der Dispersionsklebstoff auch noch einen Photoinitiator, kann unter kurzzeitiger UV-Lichtbestrahlung eine Haut auf dem austretenden Klebstoff ausgebildet werden, welche ein "Weiterlaufen" des austretenden Klebstoffs verhindert.

## Beschreibung

### Technisches Gebiet

Die Erfindung befaßt sich mit Dispersionsklebstoffen, insbesondere mit der sofortigen Verarbeitungsfähigkeit unter Verwendung solcher Klebstoffe hergestellten Verbindungen.

### Stand der Technik

Im Stand der Technik sind seit langem Dispersionsklebstoffe bekannt. Derartige Klebstoffe werden insbesondere in solchen Prozessen eingesetzt, in denen die Aushärtzeit nur eine untergeordnete Rolle spielt. Mit Rücksicht auf immer kürzere Taktzeiten in der Produktion bedeutet dies, daß Dispersionsklebstoffe immer mehr zurückgedrängt werden. Will man aus Gründen der vergleichsweise guten physiologischen Verträglichkeit von Dispersionklebstoffen auf den Einsatz solcher Klebstoffe nicht verzichten, ist eine aufwendig Wärmebehandlung notwendig, um die Verbindungen, welche durch die Verwendung von Dispersionsklebstoffen realisiert wurden, in den geforderten kurzen Taktzeiten zur Verfügung zu stellen.

Daher liegt der Erfindung die Aufgabe zugrunde, einen Dispersionsklebstoff anzugeben, welcher auch ohne nachfolgende Wämebehandlung in kurzen Taktzeiten eine weiterverarbeftungsfähige Verbindung herstellt.

### Darstellung der Erfindung

Diese Aufgabe wird mit der Merkmalskombination gemäß Anspruch 1 gelöst. Vorteilhafte Aus- und Weiterbildungen der Erfindung sind den Ansprüchen 2 bis 5 entnehmbar.

Wird gemäß Anspruch 1 einem Dispersionsklebstoff auf Polyvinylacetat- und/oder Polyacrylatbasis ein alifatisches difunktionelles Acrylat zugesetzt, erhöht sich die Soforthaftung (auch Tack genannt) entscheidend. Dies bedeutet, daß die unter Verwendung des erfindungsgemäß modifizierten Dispersionsklebstoffs herstellten Verbindungen entgegen Verbindungen, welche nur mit Dispersionsklebstoffen auf reiner Polyacetat- und/oder Polyacrylatbasis hergestellt wurden, die zu verbindenden Gegenstände sofort nach ihrem Zusammenfügen lagestabil aneinander haften.

Ist dem erfindungsgemäß modifizierten Dispersionsklebstoff außerdem noch ein Photoinitiator zugesetzt, wird an der Oberfläche der Klebstoffverbindung eine für Feuchtigkeit durchdringbare Haut gebildet, wenn die Klebstoffverbindung einer kurzzeitigen UV-Bestrahlung ausgesetzt wird. Die sich bildende Haut ist von ganz besonderem Vorteil, wenn mit Klebstsoffüberschuß geklebt wird. Darunter ist eine Klebstoffverbindung zu verstehen, bei welcher zur Verbindung der jeweiligen Teile mehr Klebstoff aufgetragen als rechnerisch notwendig ist. Hierauf wird immer dann zurückgegriffen, wenn sichergestellt werden muß, daß die jeweils zu verbindenden Teile immer vollständig mittels einer Lage aus Klebstoff miteinander verbunden sind. Wird jedoch mit Klebstoffüberschuß gearbeitet, läßt sich nicht ausschließen, daß Klebstoff aus der jeweiligen Klebfuge austritt. Handelt es sich bei dem Klebstoff um einen herkömmlichen Dispersionsklebstoff und sollen nachfolgende Prozeßschritte in schneller zeitlicher Abfolge ausgeführt werden, sind relativ langwierige Trocknungs-bzw. Aushärteschritte notwendig, um ein Verlaufen des Dispersionsklebstoffs während der folgenden Produktionsschritte auszuschließen. Wird jedoch der erfindungsgemäße Dispersionsklebstoff einer kurzzeitigen UV-Lichtbestrahlung ausgesetzt, wird an der bestrahlten Oberfläche eine Haut gebildet, die die sofortige Weiterverarbeitung der erstellten Verbindung erlaubt, ohne daß die Gefahr besteht, daß die über dem Dispersionsklebstsoff verbundenen Teile, etc. durch verlaufenden Klebstoff verschmiert werden. Da i.ü. die Haut auch feuchtigkeitsdurchlässig ist, wird die Härtung bzw. Durchtrocknung einer derart hergestellten Klebstoffverbindung nicht beeinträchtigt.

Besonders gute Ergebnisse werden dann erzielt, wenn der Anteil des alifatischen difunktionellen Acrylats bezogen auf den jeweiligen Dispersionsklebstoff zwischen 2 und 4 Gew% liegt. Größere Anteile des alifatischen difunktionellen Acrylats sind nicht geeignet, weil diese die sich unter UV-Licht bildende Haut feuchtigkeitsundurchlässig werden lassen und zur Verspröderung der herstellten Verbindung führen. Von geringeren Anteilen ist abzusehen, da diese zu einer ungeeigneten, weil für die Dispersion durchdringbaren Haut führen.

### Wege zum Ausführen der Erfindung

Die Erfindung soll nun anhand einer Figur näher erläutert werden.

Diese Figur zeigt in schematischem Seitenschnitt einen Lautsprecher 10, welcher im wesentlichen von einem Magnetsystem 11, einem Lautsprecherkorb 12 und einer Membran 13 gebildet ist. Dabei ist die konisch geformte Membran 13 in den Lautsprecherkorb 12 eingesetzt und an ihrem oberen Rand 14 mittels einer gewölbten Sicke 15 mit dem oberen Korbrand 16 verbunden. Ferner ist auf den oberen Korbrand 16 noch ein Dichtring 17 aufgesetzt und verbunden.

Der untere Rand 18 der Membran 13 ist mit einer sogenannten Staubschutzkalotte 19 versehen, welche die am unteren Rand 18 bestehende Öffnung 20 in der Membran 13 verschließt.

Im vorliegenden Ausführungsbeispiel sind der Dichtring 17 und die Staubschutzkalotte 19 mit der Membran 13 bzw. mit dem oberen Korbrand 16 mittels eines Dispersionsklebstoffs verbunden. Damit sich die Staubschutzkalotte 19 und der Dichtring 17 im Betrieb des Lautsprechers 10 akustisch neutral verhalten, ist es notwendig, daß die jeweiligen Verbindungsstellen mit Klebstoffüberschuß hergestellt werden.

Würde nur ein Dispersionsklebstoff auf reiner Polyvinylacetat- und/oder Polyacrylatbasis verwendet und müßte der gezeigte Lautsprecher 10 für spätere Herstellungsschritte um 180° gedreht werden, so daß er auf dem Dichtring 17 aufliegt, bestünde bei der Realisierung der Verbindungen mit Klebstoffüberschuß die Gefahr, daß überschüssiger und aufgrund der Schwerkraft verlaufender Klebstoff beispielsweise die Membran 13 oder die Sicke 15 verunreinigt, sofern vor dem Drehen des Lautsprechers 10 die Klebstoffverbindungen nicht entsprechend dem Stand der Technik aufwendig getrocknet bzw. ausgehärtet werden.

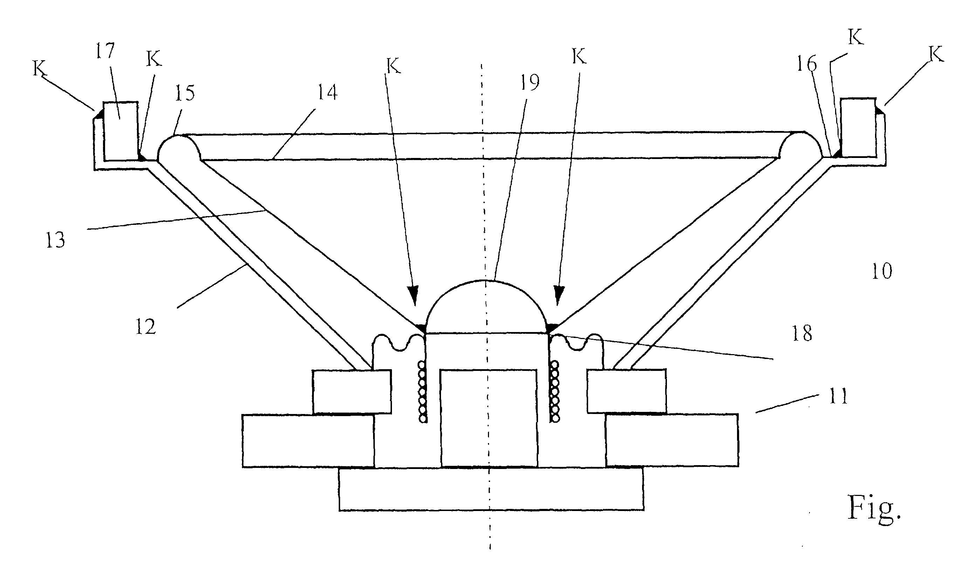

Werden jedoch dem jeweiligen Dispersionsklebstoff zwischen 2 und 4 Gew.% eines alifatischen difünktionellen Acrylats und zwischen 1 und 2 Gew.% eines Photoinitiators zugegeben, kann der gezeigte Lautsprecher 10 olme Probleme einer sofortigen Weiterverarbeitung zugeführt werden, wenn der austretende Klebstoff, welcher in der Figur mit K bezeichnet ist, einige Sekunden mit UV-Licht bestrahlt wird. In diesem Fall wir eine Haut gebildet, die ein Verlaufen der Dispersion verhindert.

Besonders gute Ergebnisse wurden mit einem alifatischen difunktionellen Acrylat der Firma Akros erzielt, welches unter der Bezeichnung Actilane 421 vertrieben wird. Als Photoinitiator wurde Darocure 1173 der Firma Ciba verwendet. Rezepturen für einen erfindungsgemäßen Dispersionsklebstoff sind der nachfolgenden Tabelle entnehmbar:

| | Beispiel 1 | Beispiel 2 | Beispiel 3 | Beispiel 4 |
|---|---|---|---|---|
| Polyvinylacetat | 97,0 % | 94,0 % | 48,5 % | 47,0 % |
| Polyacrylat | 0,0 % | 0,0 % | 48,5 % | 47,0 % |
| alifatisches difunktionelles Acrylat | 2,0 % | 4,0 % | 2,0 % | 4,0 % |
| Photoinitiator | 1,0 % | 2,0 % | 1,0 % | 2,0 % |

Nur der Vollständigkeit halber sei darauf hingewiesen, daß in den in der obigen Tabelle angegebenen Rezepturen nicht notwendig ein Photinitiator enthalten sein muß. In diesem Fall entfällt die Möglichkeit unter UV-Licht eine Haut zu bilden. Jedoch verbessert die Zugabe von alifatischem difunktionellen Acrylat den Tack der Dispersion auf Polyvinylacetat- und/oder. Polyacrylatbasis so erheblich, daß nach dem Aufsetzen der Staubschutzkalotte 19 diese vom Klebstoff gehalten wird, selbst wenn der Lautsprecher anschließend um 180° gedreht wird.

## Patentansprüche

1. Dispersionsklebstoff auf Polyvinylacetat- und/oder Polyacrylatbasis
dadurch gekennzeichnet,
daß der Dispersionsklebstoff ein alifatisches difunktionelles Acrylat enthält.

2. Dispersionsklebstoff nach Anspruch 1,
dadurch gekennzeichnet,
daß dem Dispersionsklebstoff ein Photoinitiator zugesetzt ist.

3. Dispersionsklebststoff nach Anspruch 1 oder Anspruch 2,
dadurch gekennzeichnet,
daß der Anteil des alifatischen difunktionellen Acrylats bezogen auf den jeweiligen Dispersionsklebstoff zwischen 2 und 4 Gew.% liegt.

4. Dispersionsklebstoff Anspruch 3,
dadurch gekennzeichnet,
daß das der Anteil des Photoinitiators bezogen auf den jeweiligen Dispersionsklebstoff zwischen 1 und 2 Gew.% liegt.

5. Dispersionsklebstoff nach Anspruch 2 oder Anspruch 4,
dadurch gekennzeichnet,
daß der Dispersionsklebstoff bei solchen Verbindungen verwendet wird, bei denen zur Herstellung der Verbindung mit Klebstoffüberschuß gearbeitet wird.
